# EUROPEAN PATENT SPECIFICATION

(11) **EP 3 725 540 B1**
(45) Date of publication and mention of the grant of the patent: **15.09.2021**
(21) Application number: 20163353.4
(22) Date of filing: 16.03.2020
(51) Int. Cl.: B60B 1/00, B60B 3/06, B60B 27/02, B60B 27/04, B60B 1/08, B62M 21/00

(54) **DIECAST WHEEL, WHEEL UNIT AND STRADDLED VEHICLE**
DRUCKGUSSRAD, RADEINHEIT UND GRÄTSCHSITZFAHRZEUG
ROUE COULÉE SOUS PRESSION, UNITÉ DE ROUE ET VÉHICULE À ENFOURCHER

(30) Priority: 19.04.2019 JP 2019079752
(43) Date of publication of application: 21.10.2020
(73) Proprietor: Yamaha Hatsudoki Kabushiki Kaisha, Shizuoka-ken 438-8501 (JP)
(72) Inventor: IWAMURA, Fumiaki, Shizuoka-ken, 438-8501 (JP)
(74) Representative: Grünecker Patent- und Rechtsanwälte PartG mbB

(56) References cited:
- EP-A1- 2 626 217
- EP-A2- 3 135 573
- JP-A- 2007 118 684
- JP-A- 2011 213 232

## Description

The present invention relates to a diecast wheel, and specifically, to a diecast wheel formed of a magnesium alloy, and also relates to a wheel unit that comprises a diecast wheel and a straddled vehicle including such a wheel unit.

Die casting has an advantage of shortening the production time as compared with gravity casting or the like, and therefore, is expected to improve the productivity. A technology of producing a wheel of a magnesium alloy by die casting is being established. Use of a magnesium alloy as a material may decrease the weight of the wheel as compared with use of steel or an aluminum alloy, which is commonly used conventionally. A wheel produced by die casting may be referred to as a "diecast wheel". A diecast wheel formed of a magnesium alloy is disclosed in, for example, JP 2007-118684 A.

The diecast wheel disclosed in JP 2007-118684 A includes a rim, a hub and spokes integrally formed of a magnesium alloy by die casting. A damper housing accommodating a hub damper (hereinafter, referred to simply as a "damper") is attached to the hub by a plurality of bolts. Namely, a portion accommodating the damper (damper housing) is formed separately from the hub and the like. Although JP 2007-118684 A does not refer to a material or a production method of the damper housing, the damper housing may be, for example, forged product of an aluminum alloy.

When considering forming a portion accommodating a damper (hereinafter, referred to as a "damper accommodation portion") integrally with the hub and the like to decrease the production cost and the number of parts and also to further decrease the weight of the wheel, there may be the following problems.

A rib that is to be engaged with the damper is provided in the damper accommodation portion. If the thickness of the rib is increased in order to provide a sufficient strength of the damper accommodation portion, the difference in the thickness between the rib and the other portions of the damper accommodation portion (e.g., a bottom portion of the damper accommodation portion) is increased. This may cause cracks during casting. A magnesium alloy has a characteristic of being coagulated quickly. Therefore, portions having different thicknesses from each other have a relatively large difference in the time period required for molten metal to be coagulated after being injected. For this reason, the above-mentioned cracks tend to be caused in a portion that requires a long time to be coagulated.

In order to prevent the above-mentioned cracks, the thickness of the other portions of the damper accommodation portion may be made closer to the thickness of the rib. However, this may increase the weight of the wheel. Namely, in the case where the thickness of the other portions of the damper accommodation portion is made closer to the thickness of the rib, the advantage that the use of a magnesium alloy decreases the weight of the wheel cannot be fully utilized.

The prior art technique needs further improvement in view of, in a diecast wheel formed of a magnesium alloy in which a damper accommodation portion is integrated with a hub and the like, suppressing a decrease in the casting quality, and making the damper accommodation portion sufficiently strong while making the diecast wheel sufficiently lightweight. Accordingly, it is the object of the present invention to provide a diecast wheel, a wheel unit that comprises a diecast wheel and a straddled vehicle including such a wheel unit in which a damper accommodation portion can be integrated with a hub and the like, can suppressing a decrease in the casting quality, and can make the damper accommodation portion sufficiently strong while making the diecast wheel sufficiently lightweight. According to the present invention said object is solved by diecast wheel having the features of independent claim 1. Moreover, said object is solved by is also solved by a wheel unit according to claim 7 and/or a straddled vehicle according to claim 9. Preferred embodiments are laid down in the dependent claims.

In one general aspect, a diecast wheel formed of a magnesium alloy according to a the invention includes a ring-shaped rim; a hub including an inner cylinder through which an axle is inserted and an outer cylinder enclosing the inner cylinder; and a plurality of spokes coupling the rim and the hub to each other. The hub further includes a coupling portion coupling the inner cylinder and the outer cylinder to each other, a damper accommodation portion defined by the inner cylinder, the outer cylinder and the coupling portion, the damper accommodation portion accommodating a plurality of dampers, and a plurality of ribs provided in the damper accommodation portion, the plurality of ribs being each in engagement with one of the plurality of dampers. The hub is integrally formed. The plurality of ribs each include a pair of first longitudinal walls protruding outward in an axle direction from the coupling portion, the pair of first longitudinal walls being located with a predetermined interval being provided therebetween and extending in a diametrical direction of the diecast wheel, a lateral wall extending in a direction crossing the axle direction and connecting the pair of first longitudinal walls to each other, and at least one second longitudinal wall protruding outward or inward in the axle direction from the lateral wall, the at least one second longitudinal wall extending in a circumferential direction of the diecast wheel and connecting the pair of first longitudinal walls to each other.

In a preferred embodiment, the plurality of ribs each include a plurality of recessed portions defined by the pair of first longitudinal walls, the at least one second longitudinal wall, the lateral wall, the inner cylinder and the outer cylinder.

In a preferred embodiment, depth d1 of the damper accommodation portion and depth d2 of each of the plurality of recessed portions fulfill the relationship of (0.1) · d1 ≤ d2 ≤ (0.7) · d1.

In a preferred embodiment, a thickness of the at least one second longitudinal wall is greater than a thickness of each of the pair of first longitudinal walls.

In an optional embodiment, a thickness of the lateral wall is greater than a thickness of each of the pair of first longitudinal walls.

In a preferred embodiment, width w of each of the plurality of ribs is 15 mm or greater, and depth d1 of the damper accommodation portion is 30 mm or greater.

In another general aspect, a straddled vehicle according to a preferred embodiment includes the diecast wheel having any of the above-described structures.

In the diecast wheel formed of a magnesium alloy according to a preferred embodiment, the hub including the damper accommodation portion is integrally formed. Therefore, as compared with in the case where the damper accommodation portion is formed separately from the hub, the production cost and the number of the parts may be decreased, and the weight of the diecast wheel may be decreased. In the diecast wheel in this embodiment, the ribs provided in the damper accommodation portion each include the pair of first longitudinal walls extending in the diametrical direction and the lateral wall extending in a direction crossing the axle direction and connecting the pair of first longitudinal walls to each other. Namely, the ribs do not have a simple solid structure, but may have portions removed in a thickness direction from the solid structure. Therefore, the difference in the thickness between the ribs and the other portions of the damper accommodation portion may be decreased, and thus occurrence of cracks may be suppressed. In addition, the ribs each include at least one second longitudinal wall extending in the circumferential direction and connecting the pair of first longitudinal walls to each other. Therefore, the ribs (and therefore, the damper accommodation portion) may be made sufficiently strong. It is not needed to increase the thickness of the portions of the damper accommodation portion other than the ribs in order to suppress the occurrence of the cracks. Therefore, the diecast wheel may be made sufficiently lightweight. As can be seen, according to a preferred embodiment, in a diecast wheel formed of a magnesium alloy in which the damper accommodation portion is integrated with the hub and the like, a decrease in the casting quality may be suppressed, and the damper accommodation portion may be made sufficiently strong while the diecast wheel may be made sufficiently lightweight.

It is preferred that the ribs each include the plurality of recessed portions defined by the pair of first longitudinal walls, the at least one second longitudinal wall and the lateral wall of the rib and the inner cylinder and the outer cylinder of the hub. In other words, it is preferred that the lateral wall of the rib connects portions, other than the top ends, of the pair of first longitudinal walls to each other. There may be a case where a step of inspecting a rear surface of the damper accommodation portion (the rear surface is an outer surface of the diecast wheel) is performed. In the case where the ribs do not include the recessed portions described above, namely, in the case where the lateral wall connects the top ends of the pair of first longitudinal walls to each other, a surface inspection tool may not easily reach the rear surface of the lateral wall. By contrast, in the case where the ribs have the recessed portions as described above, the surface inspection tool easily reaches the rear surface of the lateral wall. Therefore, the post-casting inspection on the outer surface may be performed in a preferred manner.

From the point of view of inspecting the rear surface of the damper accommodation portion in a preferred manner, it Is preferred that depth d2 of the recessed portion is great. Specifically, it is preferred that depth d2 of the recessed portion is 10% or more of depth d1 of the damper accommodation portion. However, if depth d2 of the recessed portion is too great, namely, if the lateral wall is too close to a bottom end of the first longitudinal wall, a portion of a mold corresponding to the recessed portion becomes too lengthy, which may make it difficult to perform die casting in a preferred manner. Therefore, it is preferred that depth d2 of the recessed portion is 70% or less of depth d1 of the damper accommodation portion. As can be seen, it is preferred that depth d1 of the damper accommodation portion and depth d2 of the recessed portion fulfill the relationship of (0.1) · d1 ≤ d2 ≤ (0.7) · d1.

The ribs each receive a stress in the circumferential direction from the corresponding damper. Therefore, it is preferred that the thickness of the second longitudinal wall is greater than the thickness of the first longitudinal wall.

It is preferred that the thickness of the lateral wall is greater than the thickness of the first longitudinal wall for the same reason regarding the thickness of the at least one second longitudinal wall.

There is no specific limitation on the value of width w of the rib. In the case where width w of the rib is relatively great, it is preferred that depth d1 of the damper accommodation portion is greater in order to provide a sufficient capacity of the damper accommodation portion (i.e., in order to provide a sufficient volume of the damper, which is an elastic body). Specifically, in the case where width w of the rib is 15 mm or greater, it is preferred that depth d1 of the damper accommodation portion is 30 mm or greater.

The diecast wheel according to a preferred embodiment is preferably usable for various types of straddled vehicles including a motorcycle.

According to a preferred embodiment, in a diecast wheel formed of a magnesium alloy in which a damper accommodation portion is integrated with a hub and the like, a decrease in the casting quality may be suppressed, and the damper accommodation portion may be made sufficiently strong while the diecast wheel may be made sufficiently lightweight.

### BRIEF DESCRIPTION OF THE DRAWINGS

FIG. 1 is a left side view schematically showing a motorcycle 1 according to a preferred embodiment.
FIG. 2 is a left side view schematically showing a wheel (diecast wheel) 100 included in the motorcycle 1.
FIG. 3 is a right side view schematically showing the wheel 100.
FIG. 4 is a plan view of the wheel 100 as seen in a diametrical direction thereof.
FIG. 5 is a perspective view schematically showing a damper 40.
FIG. 6 shows a state in which a plurality of the dampers 40 are accommodated in a damper accommodation portion 124 of a hub 120.
FIG. 7 shows a driven flange 50 and a driven sprocket 60 together with the dampers 40.
FIG. 8 is a perspective view of the hub 120 and the vicinity thereof as seen from the left.
FIG. 9 is a cross-sectional view of the wheel 100 taken along line IX-IX' in FIG. 8.
FIG. 10 is a cross-sectional view of the wheel 100 taken along line X-X' in FIG. 8.
FIG. 11 is a cross-sectional view showing another example of structure of the rib 140.
FIG. 12 is a cross-sectional view showing the another example of structure of the rib 140.

### DETAILED DESCRIPTION

Hereinafter, preferred embodiments will be described with reference to the accompanying drawings. In the following, a motorcycle will be described as an example of straddled vehicle according to a preferred embodiment.

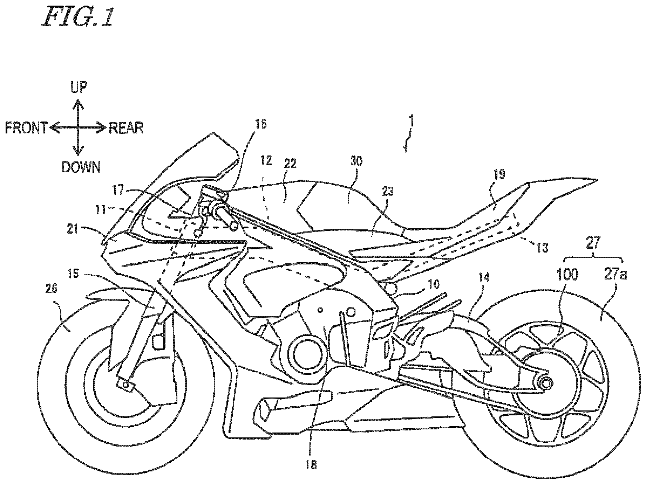

First, with reference to FIG. 1, an overall structure of a motorcycle 1 according to a preferred embodiment will be described. FIG. 1 is a left side view schematically showing the motorcycle 1. In the following description, the terms "front", "rear", "left", "right", "up" and "down" respectively refer to front, rear, left, right, up and down as seen from a rider sitting on a seat 19 of the motorcycle 1.

As shown in FIG. 1, the motorcycle 1 includes a vehicle body frame 10, a power unit 18, a front wheel 26, a rear wheel 27, and a fuel tank 30.

The vehicle body frame 10 includes a head pipe 11, a pair of, more specifically, left and right, tank frames 12, a pair of, more specifically, left and right, rear frames 13, and a pair of, more specifically, left and right, rear arms 14. The head pipe 11 is located in a front region of the motorcycle 1. The pair of tank frames 12 each extend rearward from the head pipe 11. As seen in a side view, the pair of tank frames 12 each include a portion curved rearward. The pair of rear frames 13 are respectively connected with the curved portions of the pair of tank frames 12 corresponding thereto. The pair of rear arms 14 are respectively connected with rear ends of the tank frames 12 corresponding thereto.

A steering shaft 17 is rotatably inserted into the head pipe 11. A handle 16 is connected with a top portion of the steering shaft 17. A pair of, more specifically, left and right, front forks 15 are attached to the steering shaft 17 via a bracket (not shown). The front wheel 26 is rotatably supported at bottom ends of the front forks 15. In accordance with an operation of the handle 16, the front wheel 26 rotates leftward or rightward.

The rear wheel 27 is rotatably supported at rear ends of the rear arms 14. The rear wheel 27 is rotated by transmission thereto of power of the power unit 18. The rear wheel 27 includes a wheel 100 and a tire 27a attached to an outer circumferential surface (rim 110 described below) of the wheel 100.

The fuel tank 30 is attached to the tank frames 12 and the rear frames 13. The seat 19 is located to the rear of the fuel tank 30.

A front cowl 21 is located to the front of the handle 16. A cover 22 is located to the rear of the handle 16. A pair of, more specifically, left and right, side covers 23 are located below the cover 22. The side covers 23 are attached to the tank frames 12 and the rear frames 13.

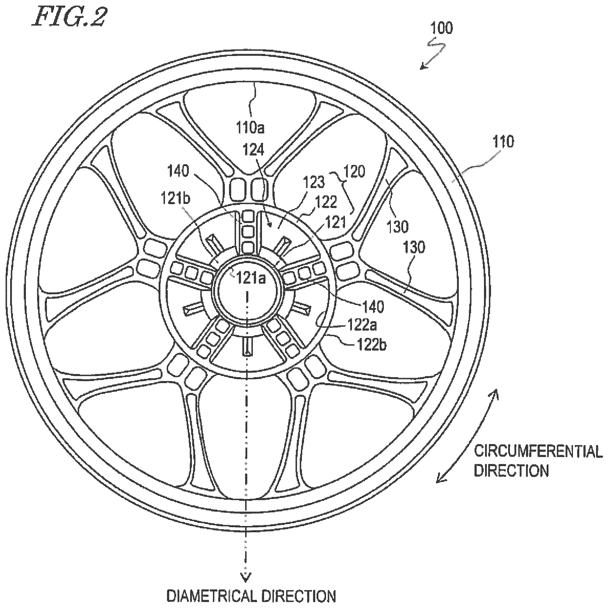

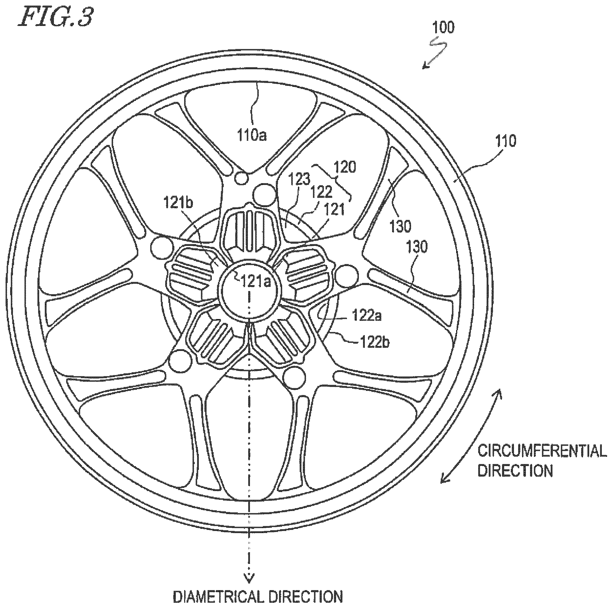

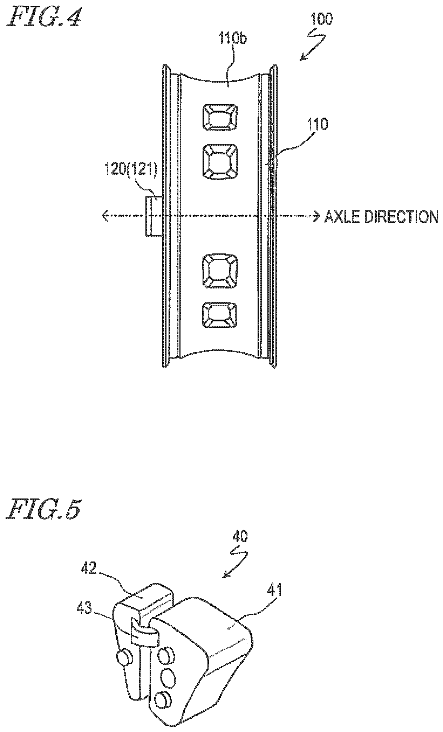

Now, with reference to FIG. 2, FIG. 3 and FIG. 4, a structure of the wheel 100 will be described. FIG. 2 and FIG. 3 are respectively a left side view and a right side view schematically showing the wheel 100. FIG. 4 is a plan view of the wheel 100 as seen in a diametrical direction thereof.

The wheel 100 is produced of a magnesium alloy by die casting. Namely, the wheel 100 is a diecast wheel of a magnesium alloy. As a material of the wheel 100, a magnesium alloy having any of various known compositions is usable. As shown in FIG. 2, FIG. 3 and FIG. 4, the wheel 100 includes the rim 110, a hub 120 and a plurality of spokes 130.

The rim 110 is ring-shaped and extends in a circumferential direction. The rim 110 has an inner circumferential surface 110a and an outer circumferential surface 110b. The tire 27a is attached to the outer circumferential surface 110b of the rim 110.

The hub 120 includes an inner cylinder 121 through which an axle is inserted, and an outer cylinder 122 enclosing the inner cylinder 121. The inner cylinder 121 is generally cylindrical and has an inner circumferential surface 121a and an outer circumferential surface 121b. The axle is inserted through a hole (axle insertion hole) defined by the inner circumferential surface 121a of the inner cylinder 121. The outer cylinder 122 is generally cylindrical, and has an inner circumferential surface 122a and an outer circumferential surface 122b.

The hub 120 further includes a coupling portion 123 coupling the inner cylinder 121 and the outer cylinder 122 to each other, a damper accommodation portion 124 accommodating a plurality of dampers (not shown in any of FIG. 1 through FIG. 4), and a plurality of ribs 140 provided in the damper accommodation portion 124. The damper accommodation portion 124 is a space defined by the inner cylinder 121, the outer cylinder 122 and the coupling portion 123. In the example shown in the figures, the damper accommodation portion 124 is located on the left side in the wheel 100. The plurality of ribs 140 are each in engagement with one of the plurality of dampers as described below. In the example shown in the figures, five ribs 140 are provided in the damper accommodation portion 124. The damper accommodation portion 124 may be considered as being divided into five regions by the five ribs 140. The number of the plurality of ribs 140 is not limited to five as in this embodiment.

In this embodiment, the hub 120 having the above-described structure is integrally formed. Namely, in this embodiment, no damper housing formed separately from the hub 120 is attached.

The plurality of spokes 130 couples the rim 110 and the hub 120 to each other. More specifically, the plurality of spokes 130 couples the inner circumferential surface 121a of the rim 121 and the outer circumferential surface 122b of the outer cylinder 122 of the hub 120 to each other. In the example shown in the figures, the wheel 100 includes ten spokes 130. The number of the plurality of spokes 130 is not limited to ten. In the example shown in the figures, each two spokes 130 adjacent to each other are integrated with each other on the hub 120 side. The spokes 130 are not limited to having such a structure.

FIG. 5 shows a damper 40 accommodated in the damper accommodation portion 124. The damper 40 includes a first elastic body 41, a second elastic body 42 smaller than the first elastic body 41, and a bridge 43 coupling the first elastic body 41 and the second elastic body 42 to each other.

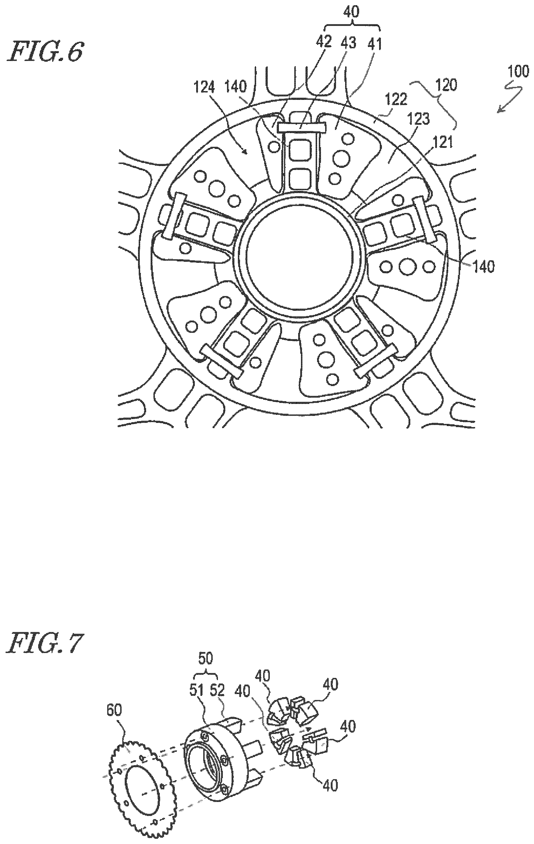

FIG. 6 shows a state in which a plurality of the dampers 40 are accommodated in the damper accommodation portion 124. As shown in FIG. 6, the dampers 40 are each located such that the bridge 43 strides over the corresponding rib 140, and are each in engagement with the corresponding rib 140. In the example shown in the figure, the damper accommodation portion 124 is divided into five regions by the five ribs 140. In each of the five regions, the first elastic body 41 of one of the dampers 40 and the second elastic body 42 of another one of the dampers 40 are located.

In the rear wheel 27 of the motorcycle 1, a driven flange 50 and a driven sprocket 60 shown in FIG. 7 are located in the vicinity of the damper accommodation portion 124, in which the dampers 40 are accommodated.

The driven flange 50 includes a ring-shaped flange main body 51 and a plurality of protrusions (claws) 52 protruding inward in an axle direction from the flange main body 51. The driven flange 50 is located such that each of the protrusions 52 are located between two adjacent dampers 40. The driven sprocket 60 is tightened to an outer side surface, in the axle direction, of the flange main body 51 of the driven flange 50 by, for example, a bolt (not shown).

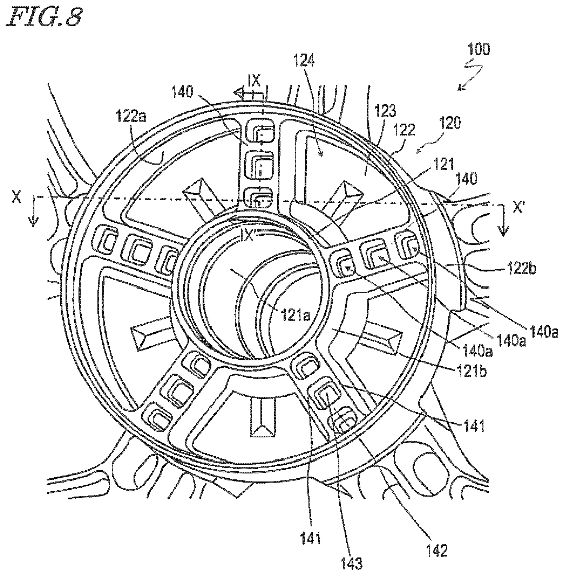

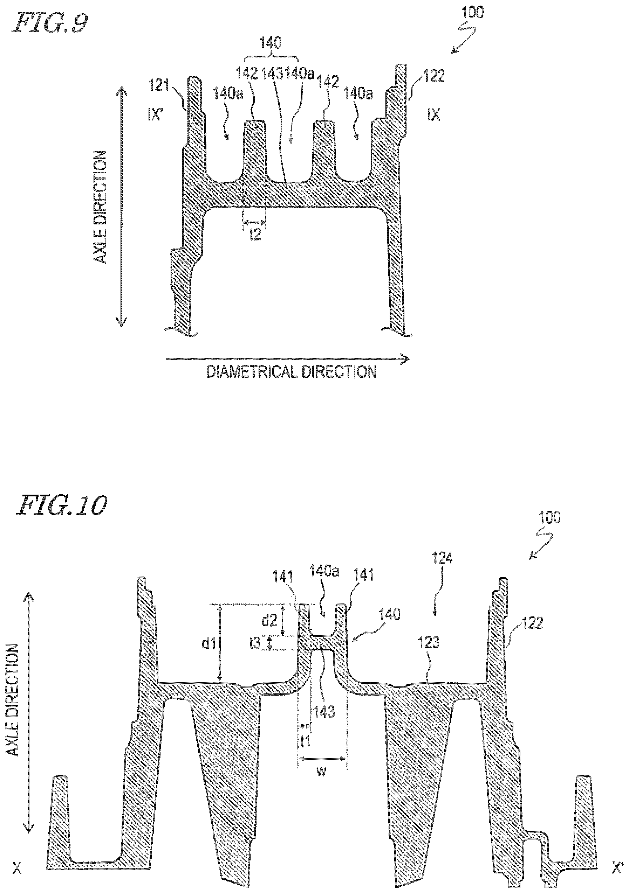

Now, with reference also to FIG. 8, FIG. 9 and FIG. 10, the structure of the plurality of ribs 140 included in the hub 120 will be described in more detail. FIG. 8 is a perspective view of the hub 120 and the vicinity thereof as seen from the left. FIG. 9 and FIG. 10 are respectively cross-sectional views of the wheel 100 taken along line IX-IX' and line X-X' in FIG. 8.

As shown in FIG. 8, FIG. 9 and FIG. 10, each of the plurality of ribs 140 does not have a simple plate-like shape. The ribs 140 each include a pair of first longitudinal walls 141, a lateral wall 143, and at least one second longitudinal wall 142.

As shown in FIG. 8 and FIG. 10, the pair of first longitudinal walls (also called "first axle-direction walls") 141 protrude outward in the axle direction from the coupling portion 123. The pair of first longitudinal walls 141 are located with a predetermined interval being provided therebetween and extend in the diametrical direction of the wheel 100.

As shown in FIG. 9 and FIG. 10, the lateral wall 143 extends in a direction crossing the axle direction (typically, a direction generally perpendicular to the axle direction). The lateral wall 143 connects the pair of first longitudinal walls 141 to each other. In the example shown in the figures, the lateral wall 143 connects middle portions, in the axle direction, of the pair of first longitudinal walls 141 to each other.

As shown in FIG. 8 and FIG. 9, the at least one second longitudinal wall (also called "second axle-direction walls") 142 includes two second longitudinal walls 142 in this embodiment. The second longitudinal walls 142 each protrude outward in the axle direction from the lateral wall 143. The second longitudinal walls 142 each extend in the circumferential direction of the wheel 100 and connect the pair of first longitudinal walls 141 to each other.

The plurality of ribs 140 each include a plurality of recessed portions 140a. In the example shown in the figures, the plurality of recessed portions 140a are three recessed portions defined by the pair of first longitudinal walls 141, the two second longitudinal walls 142 and the lateral wall 143, the inner cylinder 121 and the outer cylinder 122. The recessed portions 140a are each recessed inward in the axle direction. In other words, the recessed portions 140a are each opened outward in the axle direction.

As described above, in the wheel (diecast wheel formed of a magnesium alloy) 100 in this embodiment, the hub 120 including the damper accommodation portion 124 is integrally formed. Therefore, as compared with in the case where the damper accommodation portion 124 is formed separately from the hub 120, the production cost and the number of the parts may be decreased, and the weight of the diecast wheel 100 may be decreased. In the wheel 100 in this embodiment, the ribs 140 provided in the damper accommodation portion 124 each include the pair of first longitudinal walls 141 extending in the diametrical direction and the lateral wall 143 extending in a direction crossing the axle direction and connecting the pair of first longitudinal walls 141 to each other. Namely, the ribs 140 do not have a simple solid structure, but may have portions removed in a thickness direction from the solid structure. Therefore, the difference in the thickness between the ribs 140 and the other portions of the damper accommodation portion 124 may be decreased, and thus occurrence of cracks may be suppressed. In addition, the ribs 140 each include at least one second longitudinal wall 142 extending in the circumferential direction and connecting the pair of first longitudinal walls 141 to each other. Therefore, the ribs 140 (and therefore, the damper accommodation portion 124) may be made sufficiently strong. It is not needed to increase the thickness of the portions of the damper accommodation portion 124 other than the ribs 140 in order to suppress the occurrence of the cracks. Therefore, the diecast wheel 100 may be made sufficiently lightweight.

As described above, according to a preferred embodiment, in the diecast wheel 100 formed of a magnesium alloy in which the damper accommodation portion 124 is integrated with the hub 120 and the like, a decrease in the casting quality may be suppressed, and the damper accommodation portion 124 may be made sufficiently strong while the diecast wheel 100 may be made sufficiently lightweight.

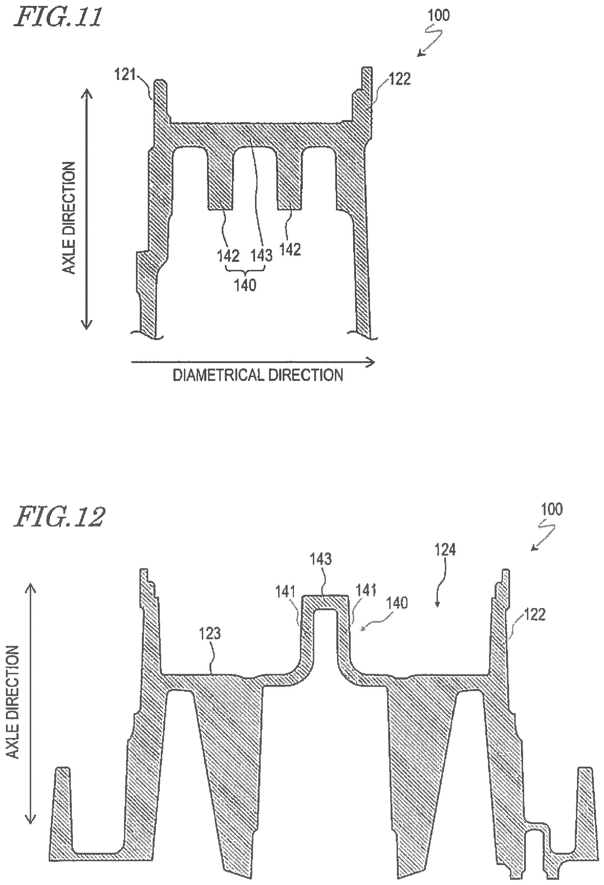

The position of the lateral wall 143 in the axle direction is not limited to the position shown in the example in FIG. 10 and the like. FIG. 11 and FIG. 12 show another example of the position of the lateral wall 143. In the example shown in FIG. 11 and FIG. 12, the lateral wall 143 connects top ends of the pair of first longitudinal walls 141 to each other. Therefore, the second longitudinal walls 142 protrude inward in the axle direction from the lateral wall 143. Even in the case where the structure shown in FIG. 11 and FIG. 12 is adopted, the occurrence of the cracks may be suppressed while the wheel 100 may be made sufficiently lightweight.

However, it is preferred that as shown in FIG. 9, FIG. 10 and the like, the ribs 140 each include the plurality of recessed portions 140a defined by the pair of first longitudinal walls 141, the at least one second longitudinal wall 142 and the lateral wall 143 of the rib 140 and the inner cylinder 121 and the outer cylinder 122 of the hub 120 (recessed portions 140a recessed inward in the axle direction). In other words, it is preferred that the lateral wall 143 of the rib 140 connects portions, other than the top ends, of the pair of first longitudinal walls 141 to each other. Hereinafter, a reason therefor will be described.

There may be a case where a step of inspecting a rear surface of the damper accommodation portion 124 (the rear surface is an outer surface of the wheel 100) is performed. In the case where the ribs 140 do not include the recessed portions 140a described above, namely, in the case where the lateral wall 143 connects the top ends of the pair of first longitudinal walls 141 to each other as shown in FIG. 11 and FIG. 12, a surface inspection tool may not easily reach a rear surface of the lateral wall 143. By contrast, in the case where the ribs 140 have the recessed portions 140a as described above, the surface inspection tool easily reaches the rear surface of the lateral wall 143. Therefore, the post-casting inspection on the outer surface may be performed in a preferred manner.

Now, an example of preferred relationship between depth d1 of the damper accommodation portion 124 and depth d2 of each of the recessed portions 140a will be described. As shown in FIG. 10, depth d1 of the damper accommodation portion 124 is a distance from a top end of the rib 140 (top end of each of the first longitudinal walls 141) to a surface of the coupling portion 123. Depth d2 of the recessed portion 140a is a distance from the top end of the rib 140 (top end of the first longitudinal wall 141) to a surface of the lateral wall 143.

As can be seen from the above description, as depth d2 of the recessed portion 140a is greater, the surface inspection tool reaches the rear surface of the lateral wall 143 more easily. Therefore, from the point of view of inspecting the rear surface of the damper accommodation portion 124 in a preferred manner, it is preferred that depth d2 of the recessed portion 140a is great. Specifically, it is preferred that depth d2 of the recessed portion 140a is 10% or more of depth d1 of the damper accommodation portion 124. However, if depth d2 of the recessed portion 140a is too great, namely, if the lateral wall 143 is too close to a bottom end of the first longitudinal wall 141, a portion of a mold corresponding to the recessed portion 140a becomes too lengthy, which may make it difficult to perform die casting in a preferred manner. Therefore, it is preferred that depth d2 of the recessed portion 140a is 70% or less of depth d1 of the damper accommodation portion 124. As can be seen, it is preferred that depth d1 of the damper accommodation portion 124 and depth d2 of the recessed portion 140a fulfill the relationship of (0.1) · d1 ≤ d2 s (0.7) · d1.

Now, an example of preferred relationship among thickness t1 of each of the first longitudinal walls 141 (see FIG. 10), thickness t2 of each of the second longitudinal walls 142 (see FIG. 9) and thickness t3 of the lateral wall 143 (see FIG. 10) will be described.

In accordance with the rotation of the rear wheel 27, the ribs 140 each receive a stress in the circumferential direction from the corresponding damper 40. The second longitudinal walls 142 and the lateral wall 143 play a role of supporting the first longitudinal walls 141 against the stress in the circumferential direction. Therefore, it is preferred that thickness t2 of the second longitudinal wall 142 is greater than thickness t1 of the first longitudinal wall 141. It is preferred that thickness t3 of the lateral wall 143 is greater than thickness t1 of the first longitudinal wall 141. Thickness t1 of the first longitudinal wall 141 is, for example, 2 mm or greater and 8 mm or less. Thickness t2 of the second longitudinal wall 142 is, for example, 2 mm or greater and 8 mm or less. Thickness t3 of the lateral wall 143 is, for example, 2 mm or greater and 8 mm or less.

Now, a preferred example of width w of each of the ribs 140 will be described. There is no specific limitation on the value of width w of the rib 140. In the case where width w of the rib 140 is relatively great, it is preferred that depth d1 of the damper accommodation portion 124 is greater in order to provide a sufficient capacity of the damper accommodation portion 124 (i.e., in order to provide a sufficient volume of the damper 40 including the first elastic body 41 and the second elastic body 42). Specifically, in the case where width w of the rib 140 is 15 mm or greater, it is preferred that depth d1 of the damper accommodation portion 124 is 30 mm or greater.

In the above-described embodiments, the ribs 140 each include two second longitudinal walls 142. The number of the second longitudinal walls 142 is not limited to two. The number of the second longitudinal walls 142 in each rib 140 may be one, or three or greater.

In this embodiment, the motorcycle 1, which is a sporty vehicle, is described as an example of straddled vehicle. The diecast wheel according to a preferred embodiment may be used for a non-sporty motorcycle 1, or may be used for a three-wheeled or four-wheeled straddled vehicle.

As described above, the diecast wheel 100 according to a preferred embodiment is formed of a magnesium alloy and includes the ring-shaped rim 110, the hub 120 including the inner cylinder 121 through which the axle is inserted and the outer cylinder 122 enclosing the inner cylinder 121, and the plurality of spokes 130 coupling the rim 110 and the hub 120 to each other. The hub 120 further includes the coupling portion 123 coupling the inner cylinder 121 and the outer cylinder 122 to each other, the damper accommodation portion 124 defined by the inner cylinder 121, the outer cylinder 122 and the coupling portion 123 and accommodating the plurality of dampers 40, and the plurality of ribs 140 provided in the damper accommodation portion 124 and each in engagement with one of the plurality of dampers 40. The hub 120 is integrally formed. The plurality of ribs 140 each include the pair of first longitudinal walls 141 protruding outward in the axle direction from the coupling portion 123, located with a predetermined interval being provided therebetween, and extending in the diametrical direction of the diecast wheel 100, the lateral wall 143 extending in a direction crossing the axle direction and connecting the pair of first longitudinal walls 141 to each other, and at least one second longitudinal wall 142 protruding outward or inward in the axle direction from the lateral wall 143, extending in the circumferential direction of the diecast wheel 100 and connecting the pair of first longitudinal walls 141 to each other.

In the diecast wheel 100 formed of a magnesium alloy in a preferred embodiment, the hub 120 including the damper accommodation portion 124 is integrally formed. Therefore, as compared with in the case where the damper accommodation portion 124 is formed separately from the hub 120, the production cost and the number of the parts may be decreased, and the weight of the diecast wheel 100 may be decreased. In the diecast wheel 100 in a preferred embodiment, the ribs 140 provided in the damper accommodation portion 124 each include the pair of first longitudinal walls 141 extending in the diametrical direction and the lateral wall 143 extending in a direction crossing the axle direction and connecting the pair of first longitudinal walls 141 to each other. Namely, the ribs 140 do not have a simple solid structure, but may have portions removed in the thickness direction from the solid structure. Therefore, the difference in the thickness between the ribs 140 and the other portions of the damper accommodation portion 124 may be decreased, and thus the occurrence of the cracks may be suppressed. In addition, the ribs 140 each include at least one second longitudinal wall 142 extending in the circumferential direction and connecting the pair of first longitudinal walls 141 to each other. Therefore, the ribs 140 (and therefore, the damper accommodation portion 124) may be made sufficiently strong. It is not needed to increase the thickness of the portions of the damper accommodation portion 124 other than the ribs 140 in order to suppress the occurrence of the cracks. Therefore, the diecast wheel 100 may be made sufficiently lightweight. As can be seen, according to a preferred embodiment, in the diecast wheel 100 formed of a magnesium alloy in which the damper accommodation portion 124 is integrated with the hub 120 and the like, a decrease in the casting quality may be suppressed, and the damper accommodation portion 124 may be made sufficiently strong while the diecast wheel 100 may be made sufficiently lightweight.

In an embodiment, the plurality of ribs 140 each include the plurality of recessed portions 140a defined by the pair of first longitudinal walls 141, the at least one second longitudinal wall 142, the lateral wall 143, the inner cylinder 121 and the outer cylinder 122.

It is preferred that the ribs 140 each include the plurality of recessed portions 140a defined by the pair of first longitudinal walls 141, the at least one second longitudinal wall 142 and the lateral wall 143 of the rib 140 and the inner cylinder 121 and the outer cylinder 122 of the hub 120. In other words, it is preferred that the lateral wall 143 of the rib 140 connects portions, other than the top ends, of the pair of first longitudinal walls 141 to each other. There may be a case where a step of inspecting the rear surface of the damper accommodation portion 124 (the rear surface is the outer surface of the diecast wheel 100) is performed. In the case where the ribs 140 do not include the recessed portions 140a described above, namely, in the case where the lateral wall 143 connects the top ends of the pair of first longitudinal walls 141 to each other, the surface inspection tool may not easily reach the rear surface of the lateral wall 143. By contrast, in the case where the ribs 140 have the recessed portions 140a as described above, the surface inspection tool easily reaches the rear surface of the lateral wall 143. Therefore, the post-casting inspection on the outer surface may be performed in a preferred manner.

In an embodiment, depth d1 of the damper accommodation portion 124 and depth d2 of each of the plurality of recessed portions 140a fulfill the relationship of (0.1) · d1 ≤ d2 ≤ (0.7) · d1.

From the point of view of inspecting the rear surface of the damper accommodation portion 124 in a preferred manner, it is preferred that depth d2 of the recessed portion 140a is great. Specifically, it is preferred that depth d2 of the recessed portion 140a is 10% or more of depth d1 of the damper accommodation portion 124. However, if depth d2 of the recessed portion 140a is too great, namely, if the lateral wall 143 is too close to the bottom end of the first longitudinal wall 141, a portion of the mold corresponding to the recessed portion 140a becomes too lengthy, which may make it difficult to perform die casting in a preferred manner. Therefore, it is preferred that depth d2 of the recessed portion 140a is 70% or less of depth d1 of the damper accommodation portion 124. As can be seen, it is preferred that depth d1 of the damper accommodation portion 124 and depth d2 of the recessed portion 140a fulfill the relationship of (0.1) · d1 ≤ d2 ≤ (0.7) · d1.

In an embodiment, thickness t2 of the at least one second longitudinal wall 142 is greater than thickness t1 of each of the pair of first longitudinal walls 141.

The ribs 140 each receive a stress in the circumferential direction from the corresponding damper 40. Therefore, it is preferred that thickness t2 of the second longitudinal wall 142 is greater than thickness t1 of the first longitudinal wall 141.

In an embodiment, thickness t3 of the lateral wall 143 is greater than thickness t1 of each of the pair of first longitudinal walls 141.

It is preferred that thickness t3 of the lateral wall 143 is greater than thickness t1 of the first longitudinal wall 141 for the same reason regarding thickness t2 of the at least one second longitudinal wall 142.

In an embodiment, width w of each of the plurality of ribs 140 is 15 mm or greater, and depth d1 of the damper accommodation portion 124 is 30 mm or greater.

There is no specific limitation on the value of width w of the rib 140. In the case where width w of the rib 140 is relatively great, it is preferred that depth d1 of the damper accommodation portion 124 is greater in order to provide a sufficient capacity of the damper accommodation portion 124 (i.e., in order to provide a sufficient volume of the damper 40, which is an elastic body). Specifically, in the case where width w of the rib 140 is 15 mm or greater, it is preferred that depth d1 of the damper accommodation portion 124 is 30 mm or greater.

The straddled vehicle 1 according to a preferred embodiment includes the diecast wheel 100 having any one of the above-described structures.

The diecast wheel 100 according to a preferred embodiment is preferably usable for various types of straddled vehicles including a motorcycle 1.

According to a preferred embodiment, in a diecast wheel formed of a magnesium alloy in which a damper accommodation portion is integrated with a hub and the like, a decrease in the casting quality may be suppressed, and the damper accommodation portion may be made sufficiently strong while the diecast wheel may be made sufficiently lightweight.

A diecast wheel according to a preferred embodiment is preferably usable for various types of straddled vehicles including a motorcycle.

## Claims

1. A diecast wheel (100) formed of a magnesium alloy, comprising:
a ring-shaped rim (110) co-axially with an axial direction of an axle;
a hub (120) co-axially with the ring-shaped rim (110) and including an inner cylinder (121) configured to insert the axle and an outer cylinder (122) co-axially enclosing the inner cylinder (121); and
a plurality of spokes (130) coupling the rim (110) and the hub (120) to each other in diametrical direction of the diecast wheel (100),
wherein the hub (120) further includes:
a coupling portion (123) coupling the inner cylinder (121) and the outer cylinder (122) to each other,
a damper accommodation portion (124) defined by the inner cylinder (121), the outer cylinder (122) and the coupling portion (123), the damper accommodation portion (124) is configured for accommodating a plurality of dampers (40), and
a plurality of ribs (140) provided in the damper accommodation portion (124), the plurality of ribs (140) being each configured for engagement with one of the plurality of dampers (40),
**characterized in that** the hub (120) is integrally formed, and **in that** the plurality of ribs (140) each include:
a pair of first longitudinal walls (141) protruding to a first side in the axle direction from the coupling portion (123), the pair of first longitudinal walls (141) being located with a predetermined interval being provided therebetween and extending in diametrical direction of the diecast wheel (100),
a lateral wall (143) extending in a direction crossing the axle direction and connecting the pair of first longitudinal walls (141) to each other, and
at least one second longitudinal wall (142) protruding to said first side or a second side being opposite to the first side in the axle direction from the lateral wall (143), the at least one second longitudinal wall (142) extending in a circumferential direction of the diecast wheel (100) and connecting the pair of first longitudinal walls (141) to each other.

2. The diecast wheel (100) of claim 1, wherein the plurality of ribs (140) each include a plurality of recessed portions (140a) defined by the pair of first longitudinal walls (141), the at least one second longitudinal wall (142), the lateral wall (143), the inner cylinder (121) and the outer cylinder (122).

3. The diecast wheel (100) of claim 2, wherein depth (d1) of the damper accommodation portion (124) in the axle direction and depth (d2) of each of the plurality of recessed portions (140a) in the axle direction fulfill the relationship of (0.1) · d1 ≤ d2 ≤ (0.7) · d1.

4. The diecast wheel (100) of any one of claims 1 through 3, wherein a thickness (t2) of the at least one second longitudinal wall (142) in diametrical direction is greater than a thickness (t1) of each of the pair of first longitudinal walls (141) in direction perpendicular to axial direction and diametrical direction.

5. The diecast wheel (100) of any one of claims 1 through 4, wherein a thickness (t3) of the lateral wall (143) in the axle direction is greater than the thickness (t1) of each of the pair of first longitudinal walls (141) in direction perpendicular to axial direction and diametrical direction.

6. The diecast wheel (100) of any one of claims 1 through 5, wherein a width (w) of each of the plurality of ribs (140) in direction perpendicular to axial direction and diametrical direction is 15 mm or greater, and depth (d1) of the damper accommodation portion (124) in the axle direction is 30 mm or greater.

7. A wheel unit comprising the diecast wheel (100) of any one of claims 1 through 6, wherein each of the damper accommodation portions (124) accommodates a damper (40) of the plurality of dampers (40).

8. The wheel unit of claim 7, wherein the damper (40) includes a first elastic body (41), a second elastic body (42) smaller than the first elastic body (41), and a bridge (43) coupling the first elastic body (41) and the second elastic body (42) to each other.

9. A straddled vehicle, comprising the diecast wheel (100) of any one of claims 1 through 6 or the wheel unit of claim 7 or 8.

## Patentansprüche

1. Din Druckguss-Rad (100), das aus einer Magnesium-Legierung gebildet ist, umfasst:
einem ringförmigen Kranz (110), der koaxial zu einer axialen Richtung einer Achse ist;
eine Nabe (120), die koaxial mit dem ringförmigen Kranz (110) ist und einen inneren Zylinder (121), der zum Einsetzen der Achse konfiguriert ist, und einen äußeren Zylinder (122), der den inneren Zylinder (121) koaxial umschließt, beinhaltet; und
eine Mehrzahl von Speichen (130), die den Kranz (110) und die Nabe (120) in diametraler Richtung des Druckguss-Rades (100) miteinander koppelt,
wobei die Nabe (120) weiterhin beinhaltet:
einen Kopplungs-Abschnitt (123), der den inneren Zylinder (121) und den äußeren Zylinder (122) miteinander koppelt,
einen Dämpfer-Aufnahme-Abschnitt (124), der durch den inneren Zylinder (121), den äußeren Zylinder (122) und den Kopplungs-Abschnitt (123) definiert ist, der Dämpfer-Aufnahme-Abschnitt (124) ist zum Aufnehmen einer Mehrzahl von Dämpfern (40) konfiguriert, und
eine Mehrzahl von Rippen (140), die in dem Dämpfer-Aufnahme-Abschnitt (124) vorgesehen sind, die Mehrzahl von Rippen (140) sind jede für einen Eingriff mit einem der Mehrzahl von Dämpfern (40) konfiguriert,
**dadurch gekennzeichnet, dass** die Nabe (120) einstückig ausgebildet ist, und dass die Mehrzahl von Rippen (140) jeweils enthalten:
ein Paar von ersten Längs-Wänden (141), die zu einer ersten Seite in der axialen Richtung von dem Kopplungs-Abschnitt (123) vorstehen, das Paar von ersten Längs-Wänden (141) ist mit einem vorbestimmten Abstand dazwischen angeordnet und erstreckt sich in diametraler Richtung des Druckguss-Rades (100),
eine Seiten-Wand (143), die sich in einer die axiale Richtung kreuzenden Richtung erstreckt und das Paar der ersten Längs-Wände (141) miteinander verbindet, und
zumindest eine zweite Längs-Wand (142), die zu der ersten Seite oder einer zweiten Seite, die der ersten Seite in axialer Richtung gegenüberliegt, von der Seiten-Wand (143) vorsteht, die zumindest eine zweite Längs-Wand (142) erstreckt sich in einer Umfangsrichtung des Druckguss-Rades (100) und verbindet das Paar der ersten Längs-Wände (141) miteinander verbindet.

2. Das Druckguss-Rad (100) gemäß Anspruch 1, wobei die Mehrzahl von Rippen (140) jeweils eine Mehrzahl von ausgesparten Abschnitten (140a) beinhalten, die durch das Paar von ersten Längs-Wänden (141), die zumindest eine zweite Längs-Wand (142), die Seiten-Wand (143), den inneren Zylinder (121) und den äußeren Zylinder (122) definiert sind.

3. Das Druckguss-Rad (100) gemäß Anspruch 2, wobei die Tiefe (d1) des Dämpfer-Aufnahme-Abschnitts (124) in axialer Richtung und die Tiefe (d2) jedes der Mehrzahl der ausgesparten Abschnitte (140a) in der axialen Richtung die Beziehung von (0,1) • d1 ≤ d2 ≤ (0,7) • d1 erfüllen.

4. Das Druckguss-Rad (100) gemäß einem der Ansprüche 1 bis 3, wobei eine Dicke (t2) der zumindest einen zweiten Längs-Wand (142) in diametraler Richtung größer ist als eine Dicke (t1) von jeder von dem Paar der ersten Längs-Wände (141) in Richtung senkrecht zur axialen Richtung und zur diametralen Richtung.

5. Das Druckguss-Rad (100) gemäß einem der Ansprüche 1 bis 4, wobei eine Dicke (t3) der Seiten-Wand (143) in der axialen Richtung größer ist als die Dicke (t1) jeder der beiden ersten Längs-Wände (141) in Richtung senkrecht zur axialen Richtung und zur diametralen Richtung.

6. Das Druckguss-Rad (100) gemäß einem der Ansprüche 1 bis 5, wobei eine Breite (w) jeder der Mehrzahl von Rippen (140) in Richtung senkrecht zur axialen Richtung und zur diametralen Richtung 15 mm oder größer ist, und die Tiefe (d1) des Dämpfer-Aufnahme-Abschnitts (124) in der axialen Richtung 30 mm oder größer ist.

7. Eine Rad-Einheit, die das Druckguss-Rad (100) gemäß einem der Ansprüche 1 bis 6 umfasst, wobei jeder der Dämpfer-Aufnahme-Abschnitte (124) einen Dämpfer (40) der Mehrzahl von Dämpfern (40) aufnimmt.

8. Die Rad-Einheit gemäß Anspruch 7, wobei der Dämpfer (40) einen ersten elastischen Körper (41), einen zweiten elastischen Körper (42), der kleiner als der erste elastische Körper (41) ist, und eine Brücke (43), die den ersten elastischen Körper (41) und den zweiten elastischen Körper (42) miteinander verbindet, beinhaltet.

9. Ein Spreiz-Sitz-Fahrzeug, welches das Druckguss-Rad (100) gemäß einem der Ansprüche 1 bis 6 oder die Rad-Einheit gemäß Anspruch 7 oder 8 umfasst.

## Revendications

1. Roue coulée sous pression (100) formée d'un alliage de magnésium, comprenant :
une jante annulaire (110) coaxiale à une direction axiale d'un essieu ;
un moyeu (120) coaxial à la jante annulaire (110) et comprenant un cylindre intérieur (121) configuré pour insérer l'essieu et un cylindre extérieur (122) entourant coaxialement le cylindre intérieur (121) ; et
une pluralité de rayons (130) couplant la jante (110) et le moyeu (120) l'un à l'autre dans une direction diamétrale de la roue coulée sous pression (100),
dans laquelle le moyeu (120) comprend en outre :
une partie de couplage (123) couplant le cylindre intérieur (121) et le cylindre extérieur (122) l'un à l'autre,
une partie de réception d'amortisseurs (124) définie par le cylindre intérieur (121), le cylindre extérieur (122) et la partie de couplage (123), la partie de réception d'amortisseurs (124) est configurée pour recevoir une pluralité d'amortisseurs (40), et
une pluralité de nervures (140) situées dans la partie de réception d'amortisseurs (124), chacune de la pluralité de nervures (140) étant configurée pour se mettre en prise avec l'un de la pluralité des amortisseurs (40),
**caractérisée en ce que** le moyeu (120) est formé d'un seul bloc, et **en ce que** chacune de la pluralité de nervures (140) comprend :
une paire de premières parois longitudinales (141) saillantes vers un premier côté dans la direction d'essieu à partir de la partie de couplage (123), la paire de premières parois longitudinales (141) étant agencée de façon qu'un intervalle prédéterminé soit ménagé entre elles et s'étendant dans une direction diamétrale de la roue coulée sous pression (100),
une paroi latérale (143) s'étendant dans une direction qui coupe la direction d'essieu et reliant la paire de premières parois longitudinales (141) l'une à l'autre, et
au moins une seconde paroi longitudinale (142) saillante vers ledit premier côté ou un second côté opposé au premier côté dans la direction d'essieu à partir de la paroi latérale (143), l'au moins une seconde paroi longitudinale (142) s'étendant dans une direction circonférentielle de la roue coulée sous pression (100) et reliant la paire de premières parois longitudinales (141) l'une à l'autre.

2. Roue coulée sous pression (100) selon la revendication 1, dans laquelle chacune de la pluralité de nervures (140) comprend une pluralité de parties en creux (140a) définies par la paire de premières parois longitudinales (141), l'au moins une seconde paroi longitudinale (142), la paroi latérale (143), le cylindre intérieur (121) et le cylindre extérieur (122).

3. Roue coulée sous pression (100) selon la revendication 2, dans laquelle une profondeur (d1) de la partie de réception d'amortisseurs (124) dans la direction d'essieu et une profondeur (d2) de chacune de la pluralité de parties en creux (140a) dans la direction d'essieu satisfont cette
relation : (0,1) · d1 ≤ d2 ≤ (0,7) · d1.

4. Roue coulée sous pression (100) selon l'une quelconque des revendications 1 à 3, dans laquelle une épaisseur (t2) de l'au moins une seconde paroi longitudinale (142) dans une direction diamétrale est supérieure à une épaisseur (t1) de chacune de la paire de premières parois longitudinales (141) dans une direction perpendiculaire à la direction axiale et à la direction diamétrale.

5. Roue coulée sous pression (100) selon l'une quelconque des revendications 1 à 4, dans laquelle une épaisseur (t3) de la paroi latérale (143) dans la direction d'essieu est supérieure à l'épaisseur (t1) de chacune de la paire de premières parois longitudinales (141) dans une direction perpendiculaire à la direction axiale et à la direction diamétrale.

6. Roue coulée sous pression (100) selon l'une quelconque des revendications 1 à 5, dans laquelle une largeur (w) de chacune de la pluralité de nervures (140) dans une direction perpendiculaire à la direction axiale et à la direction diamétrale est supérieure ou égale à 15 mm, et une profondeur (d1) de la partie de réception d'amortisseurs (124) dans la direction d'essieu est supérieure ou égale à 30 mm.

7. Unité roue comprenant la roue coulée sous pression (100) selon l'une quelconque des revendications 1 à 6, dans laquelle chacune des parties de réception d'amortisseurs (124) reçoit un amortisseur (40) de la pluralité d'amortisseurs (40).

8. Unité roue selon la revendication 7, dans laquelle l'amortisseur (40) comprend un premier corps élastique (41), un second corps élastique (42) plus petit que le premier corps élastique (41), et un pont (43) couplant le premier corps élastique (41) et le second corps élastique (42) l'un à l'autre.

9. Véhicule à enfourcher comprenant la roue coulée sous pression (100) selon l'une quelconque des revendications 1 à 6 ou l'unité roue selon la revendication 7 ou 8.
